(19) Europäisches Patentamt
European Patent Office
Office européen des brevets

(11) EP 2 748 761 B1

(12) **EUROPÄISCHE PATENTSCHRIFT**

(45) Veröffentlichungstag und Bekanntmachung des Hinweises auf die Patenterteilung:
01.03.2017 Patentblatt 2017/09

(21) Anmeldenummer: 12751312.5

(22) Anmeldetag: 20.08.2012

(51) Int Cl.:
*G06K 9/00* (2006.01)    *G06K 9/52* (2006.01)

(86) Internationale Anmeldenummer:
PCT/EP2012/066163

(87) Internationale Veröffentlichungsnummer:
WO 2013/026814 (28.02.2013 Gazette 2013/09)

(54) **PARAMETERISATIONSVERFAHREN, MODELLIERUNGSVERFAHREN SOWIE SIMULATIONSVERFAHREN SOWIE VORRICHTUNG ZUR DURCHFÜHRUNG**

PARAMETERISATION METHOD, MODELLING METHOD AND SIMULATION METHOD AND DEVICE FOR CARRYING OUT SAID METHODS

PROCÉDÉ DE PARAMÉTRISATION, PROCÉDÉ DE MODÉLISATION ET PROCÉDÉ DE SIMULATION AINSI QUE DISPOSITIF POUR LEUR MISE EN OEUVRE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 22.08.2011 DE 102011111240

(43) Veröffentlichungstag der Anmeldung:
02.07.2014 Patentblatt 2014/27

(73) Patentinhaber: Airbus Defence and Space GmbH
85521 Ottobrunn (DE)

(72) Erfinder:
• KLOSTERMANN, Sönke
21720 Mittelnkirchen (DE)
• VOGT, Dietmar
21037 Hamburg (DE)
• OLBERT, Michael
21635 Jork (DE)

(74) Vertreter: Kastel, Stefan et al
Kastel Patentanwälte
St.-Cajetan-Straße 41
81669 München (DE)

(56) Entgegenhaltungen:
• "3.Finite Random Fields" In: Winkler Gerhard: "Image Analysis, Random Fields and Markov Chain Monte Carlo Methods", 2003, Springer-Verlag Berlin Heidelberg, XP002691573, ISBN: 3-540-44213-8 Seiten 55-72, Abschnitte 3.1-3.2
• LINDEBERG Tony: "Scale-Space Theory in Computer Vision", 1994, KLUWER ACADEMIC PUBLISHERS, Doordrecht, NL, XP002691574, ISBN: 0-7923-9418-6 in der Anmeldung erwähnt Seite 9 - Seite 13 Seite 165 - Seite 174 Seiten 166-168, Abschnitte 7.1-7.1.2 Seite 227 - Seite 234 Seite 11, Abschnitt 1.4.1 Seite 227, Absatz 1 - Absatz 3 Seite 228, Absatz 1; Abbildung 9.1
• Misiti M et al.: "Les ondelettes et leurs applications", 2003, Lavoisier, Paris, France, XP002691575, ISBN: 2-7462-0526-2 Seite 32 - Seite 37 Seite 86 - Seite 102 Seiten 33-37, Abschnitte 1.2.3-1.2.4; Abbildungen 1.1-1.3 Seiten 86-90, Abschnitte 3.2-3.4; Abbildungen 3.1, 3.2
• Daubechies I: "Ten Lectures on Wavelets", 1992, SIAM, Philadelhia, US, XP002691576, ISBN: 0-89871-274-2 Seiten 156-166, Abschnitt 5.6; Abbildung 5.8

EP 2 748 761 B1

**Beschreibung**

Die Erfindung betrifft ein Parameterisationsverfahren, das z.B. bei der Modellierung und Simulation technischer Systeme Verwendung finden kann, um den Aufwand technischer realer Versuche bei der Entwicklung und Untersuchung der Systeme zu verringern. Weiter betrifft die Erfindung ein Modellierungsverfahren und ein Simulationsverfahren unter Verwendung des Parameterisationsverfahren. Schließlich betrifft die Erfindung eine Vorrichtung sowie ein Computerprogrammprodukt zur Durchführung des Verfahrens.

Die Erfindung findet insbesondere Anwendung bei dem Entwerfen und der Konstruktion komplexer Erzeugnisse, wie beispielsweise bei der Konstruktion, Konzeption und dem Entwerfen von Fahrzeugen wie Luftfahrzeugen oder Landfahrzeugen, z.B. Flugzeugen, Hubschraubern, Kraftwagen.

Ein Verhalten eines zu entwickelnden Systems ist in frühen Stadien der Entwicklung, wenn technische Innovationen aufgenommen werden sollen, durch eine hohe Anzahl von Unsicherheiten beeinflusst. Üblicherweise wird zwischen epistemischen oder erkenntnistheoretischen und aleatorischen Unsicherheiten unterschieden. Eine epistemische Unsicherheit ist eine reduzierbare Unsicherheit, welche aufgrund eines Fehlens von Kenntnissen auftritt, wohingegen eine aleatorische Unsicherheit eine inhärente Variation und somit nicht reduzierbar ist. Eine Hauptquelle von aleatorischen Unsicherheiten ist die Streuung von physikalischen Anfangs- und Randbedingungen und Systemcharakteristiken, die das Verhalten von realen Systemen bis zu einem hohen Ausmaß beeinflussen. Diese Unsicherheiten können dargestellt werden durch eine Streuung von:

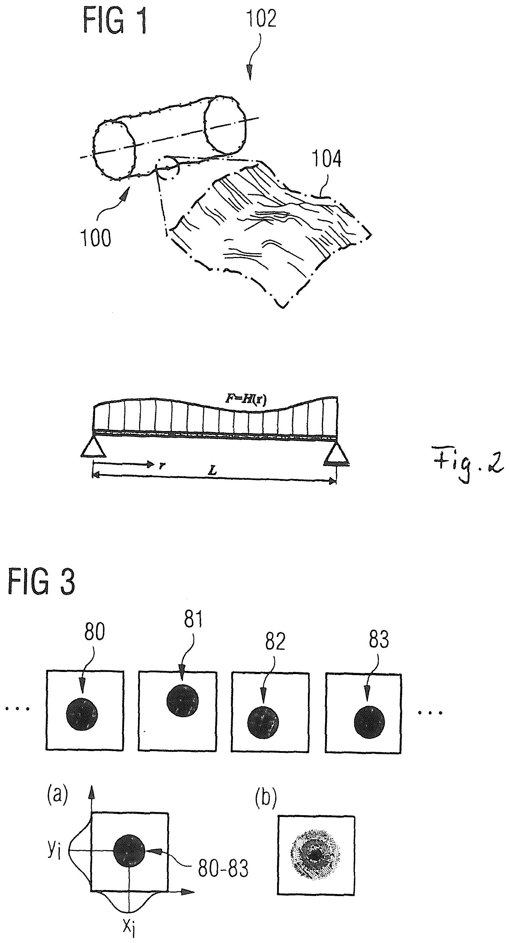

- Geometrie (z.B. Toleranzen in der Form, der Lage oder in der Messung - siehe hierzu Fig. 1),
- Materialeigenschaften (z.B. Dichte, Elastizitätsmodul (z.B. Youngscher Modul)), und
- Lasten und Anfangs- und Randbedingungen (z.B. anfängliche Geschwindigkeiten, Kräfte).

Da reale Tests und Versuche zeitraubend und teuer sind, ist es hocherwünscht, Systemverhalten durch Simulation vorherzusagen. Jedoch kann ein deterministisches Modell ganz unabhängig von dem Simulationsverfahren die oben genannten Unsicherheiten nicht mit abbilden. Daher ist es unmöglich, die numerische Robustheit des Modells sowie die Robustheit des Systemverhaltens zu quantifizieren. Um die Zuverlässigkeit der Voraussagen über das reale Systemverhalten zu erhöhen, können probabilistische Modelle geschaffen werden, die Unsicherheiten durch Modellierung individueller Aspekte des Systems und der Umgebung als eine Stichprobe von stochastischen Beeinflussungen in Betracht ziehen.

Ein Weg zur Berücksichtigung von Unsicherheiten ist, jede Einzelne davon durch eine einzelne Zufallsvariable zu beschreiben, die durch ihren Verteilungstyp und statistische Momente definiert ist. Da Zufallsvariablen unabhängig von Zeit und Raum sind, ist klar, dass sie nur eine globale Annäherung an reale Streuung sein können. Es ist unmöglich, lokale, räumliche oder zeitliche Effekte in Betracht zu ziehen. Diese lokalen Effekte können jedoch einen beträchtlichen Einfluss auf das Gesamtsystem-Ansprechverhalten haben. Für eine Berücksichtigung von lokalen Effekten können die Unsicherheiten durch sogenannte Zufallsfelder modelliert werden.

Für ein Zufallsfeld ist der Parameter eine Funktion des Positionsvektors in dem n-dimensionalen Merkmalsraum, siehe hierzu Fig. 2.

Es wird bezüglich des weiteren technologischen Hintergrunds sowie bezüglich anzuwendender Techniken insbesondere auf folgende Dokumente aus dem Stand der Technik Bezug genommen:

[1] L. Graham-Brady, X.F. Xu, "Simulation and Classification of Random Multiphase Materials through Short-Range Correlation", 7th AIAA Non-Deterministic Approaches Conference, Newport, USA, May 1-5, 2006.
[2] A.P. Witkin, "Scale-Space Filtering", Proc. 8th Int. Joint Conf. Art. Intell., Karlsruhe, Germany, 1983.
[3] T. Lindeberg, "Scale-Space Theory in Computer Vision", Kluwer Academic Publishers, Boston, USA, 1994.
[4] AU 2003/272233 B2
[5] US 78 85 463 B2
[6] CN 101694719
[7] DE 60 2004 009 960 T2
[8] US 2010/0254582 A1
[9] US 2010/0256977 A1
[10] US 2011/0021915 A1
[11] WO 2011/002327 A1
[12] US 2010/0260396 A1.

Die Eigenschaften eines homogenen Gauß'schen Zufallsfeldes werden vollständig durch die Mittelwert- und Kovarianzfunktion beschrieben. Jedoch sind diese Typen von Zufallsfeldern für die Darstellung von strukturellen Merkmalen so wie z.B. Form oder Konnektivität nicht gut geeignet, siehe hierzu die Literaturstelle [1]. Um mehr strukturelle Merkmale in Betracht zu ziehen, wird gemäß [1] daher ein Kurzbereichs-Korrelations-Modell im Kontext eines Markov-Zufallsfelds zur Charakterisierung des Zufallsmaterials verwendet. Man kommt zu dem Schluss, dass Statistiken der zweiten Ordnung für nicht-strukturierte und gering-strukturierte Morphologien geeignet sind, wohingehend Statistiken der dritten Ordnung zum Erhalt der meisten lokalen strukturellen Merkmale von mittel-strukturierten Morphologien geeignet sind. Für hoch-strukturierte Morphologien muss ein anderer Ansatz gewählt werden.

Zufallsfelder, die Geometrie, Lasten und Belastungen oder Materialeigenschaften beschreiben, können eine hochkomplexe Struktur haben (z.B. aerodynamische Lasten an einem Flügel, Verbundwerkstoffe mit variierenden Faserorientierungen) und benötigen deswegen eine Darstellung dieser Merkmale. Für eine Untersuchung durch Simulation wird eine effiziente Modell-Methodik benötigt, da eine stochastische Simulation eine hohe Anzahl von einzelnen Simulationsläufen umfassen kann (z.B. Monte-Carlo-Simulation).

Ferner gehört zum Stand der Technik:

[13] Winkler, Gerhard: "Image Analysis, Random Fields and Markov Chain Monte Carlo Methods", 2003, Springer Verlag Berlin Heidelberg, XP002691573, ISBN: 3-540-44213-8, insbesondere das Kapitel "3. Finite Random Fields", Seiten 55 - 72

[14] Misiti M et al.: "Les ondelettes et leurs applications" 2003, Lavoisier, Paris, France, XP002691575, ISBN: 2-7462-0526-2,

[15] Daubechies I: "Ten Lectures on Waveletts", 1992, SIAM, Philadelphia, US, XP002691576, ISBN: 0-89871-274-2.

[14] und [15] beschreiben die Wavelet-Multiskalenanalyse, wobei insbesondere in [14] eine Multiskalenanalyse eines Eingangssignals unter iterativem Filtern und Erfassen von Mustern beschrieben wird.

Aufgabe der Erfindung ist es, ein verbessertes Verfahren und eine verbesserte Vorrichtung zur Verbesserung von Simulationsmodellen zur Simulierung technischer Systeme zu schaffen.

Diese Aufgabe wird durch ein Verfahren gemäß Anspruch 1 und eine Vorrichtung gemäß den Anspruch 6 gelöst.

Vorteilhafte Ausgestaltungen der Erfindung sind Gegenstand der Unteransprüche.

Die Erfindung schafft insbesondere ein Verfahren zur Parameterisation von Zufallsfeldern. Mehr insbesondere schafft die Erfindung ein Verfahren und eine entsprechende Vorrichtung zur Durchführung des Verfahrens für eine mustererkennungsbasierte Parameterisation von Zufallsfeldern. Mehr insbesondere schafft die Erfindung ein auf Mustererkennung basierendes Verfahren, das zu einem Satz von Parametern aus einer gemessenen Probe eines n-dimensionalen Zufallsfeldes oder Zufallsprozesses führt. Z.B. beschreibt der erhaltene Parametersatz alle relevanten Charakteristiken des Zufallsfeldes und erlaubt Synthesen von Realisierungen des Zufallsfeldes.

Vorteile der Erfindung oder bevorzugter Ausgestaltungen davon sind:

• Nicht-homogene, nicht-periodische Strukturen von Zufallsfeldern können relativ einfach modelliert werden;
• Das Modellieren von Zufallsfeldern durch mehr Information als Mittelwert- und Kovarianzfunktion ist für den Ingenieur sehr kompliziert; hierfür bietet der hier vorgestellte Ansatz eine praktikable Lösung;
• Der Modellierungsansatz lässt sich durch Automatisierungsprozesse unterstützen;
• Auch hochstrukturierte Morphologien (wie z.B. Fasern in Faserverbundwerkstoffen, Stoß-Beschädigungen mit Delaminationseffekten) können modelliert werden.

Wenn man ein Zufallsfeld als ein n-dimensionales Bild betrachtet und aus der Bildverarbeitung abgeleitete Methoden anwendet, ergibt sich ein vielversprechender Ansatz.

Ein bevorzugtes Verfahren wendet mustererkennungsbasierende Parameterisation an, um beliebige hochstrukturierte Morphologien abzubilden.

Eine bevorzugte weitere Idee ist eine Verwendung einer mehr-skaligen Transformation, die ein diskretes Signal durch Filterung mit einem Tief- und einem Hochpass in unterschiedlich begrenzte Frequenzbänder teilt, um Muster auf unterschiedlichen Skalen zu erfassen, was eine Erfassung von Strukturen auf unterschiedlichen Größenordnungen erlaubt. Der vorgeschlagene Ansatz ist methodisch nicht in der Dimensionalität und der Komplexität der modellierten strukturellen Merkmale begrenzt. Die bijektive Transformation ermöglicht eine Rekonstruktion ohne Informationsverlust.

Die Erfindung schafft insbesondere ein Parameterisationsverfahren zur Parameterisierung eines n-dimensionalen Zufallsfeldes, wobei n eine natürliche Zahl gleich oder größer 1 ist, mit den Schritten:

Betrachten des Zufallsfeldes als n-dimensionales Bild und Durchführung einer Mustererkennung zur Erkennung von Mustern in dem Bild,
Erzeugen eines Satzes von Parametern auf Basis der erkannten Muster.

Das Parameterisationsverfahren ist weiter gekennzeichnet durch:

Filtern eines das Zufallsfeld charakterisierenden diskreten Signals mittels eines Gauß-Filters.

Das Verfahren umfasst weiter:

Filtern eines das Zufallsfeld charakterisierenden diskreten Signals zum Aufsplitten des Signals in unterschiedliche begrenzte Frequenzbänder, um so eine Transformation in mehrere Skalen durchzuführen,
Erfassen von Mustern auf unterschiedlichen Skalen, und
Erzeugen des Satzes von Parametern aufgrund der auf unterschiedlichen Skalen erfassten Mustern.

Die Schritte Filtern und Erfassen von Mustern werden iterativ nacheinander für unterschiedliche Skalen durchgeführt, um so Parametersätze für unterschiedliche Skalen zu erhalten.
Dabei werden für eine i-te Skala und eine nachfolgend in der Iteration folgende (i+1)-te Skala die folgenden Schritte durchgeführt:

a) Filtern eines Eingangssignals $E_{i-1}$, um das i-te Signal $S_i$ der i-ten Skala zu erhalten,
b) Erzeugen des Parametersatzes Ti durch Durchführen einer Mustererkennung an dem i-ten Signal Si,
c) Annähern des i-ten Signals $S_i$ unter Verwendung des Parametersatzes $T_i$, insbesondere durch eine zu der Mustererkennung inverse Transformation A, um ein angenähertes Signal $\tilde{S}_i$ zu erhalten,
d) Verwenden einer Differenz $E_i = E_{i-1} - \tilde{S}_i$ zwischen dem Eingangssignal $E_{i-1}$ und dem angenäherten Signal $\tilde{S}_i$ als Eingangssignal $E_i$ für die (i+1)-te Skala, und Durchführen der Schritte a) bis c) für die (i+1)-te Skala.

Dabei ist vorgesehen, dass die Mustererkennung eine Blob-Erfassung umfasst.
Blob-Erfassungen sind z.B. auf dem Gebiet des künstlichen Sehens oder der Bildverarbeitung bekannt; gemäß dieser Ausgestaltung der Erfindung wird eine Blob-Erfassung bei der Parameterisation von Zufallsfeldern, insbesondere zum Erzeugen von Modellen technischer Systeme zwecks Simulation, eingesetzt.
Es ist weiter bevorzugt, dass die Blob-Erfassung umfasst:

Erfassen von lokalen Maxima und Minima,
Definieren von Blobs anhand der erfassten lokalen Maxima und Minima, wobei entweder a) ein lokales Maximum oder b) ein lokales Minimum sowie Werte in einer Unterstützungregion um das Maximum bzw. Minimum einen Blob darstellen, wobei die Unterstützungsregion im Fall a) durch jeweils benachbarte lokale Minima und im Fall b) durch jeweils benachbarte lokale Maxima begrenzt wird, und Erzeugen eines Blob-Parametersatzes pro Blob aus den Eigenschaften des Blobs.

Dadurch wird eine für die Parameterisation von Zufallsfeldern besonders geeignete Mustererkennung erreicht.
Eine bevorzugte Ausgestaltung ist dadurch gekennzeichnet, dass der Blob-Parametersatz mehrere oder alle der folgenden Werte umfasst:

Position des a) Maximums bzw. b) des Minimums;
Extremwert des a) Maximums bzw. b) Minimums;
erster Kontrast, definiert als Differenz zwischen den Werten a) des Maximums und eines auf einer ersten Seite liegenden ersten benachbarten Minimums bzw. b) des Minimums und eines auf einer ersten Seite liegenden ersten benachbarten Maximums;
zweiter Kontrast, definiert als Differenz zwischen den Werten a) des Maximums und des auf einer zweiten Seite liegenden zweiten benachbarten Minimums bzw. b) des Minimums und des auf der zweiten Seite liegenden zweiten benachbarten Maximums;
erste Unterstützungsregion, definiert als, insbesondere lokaler oder zeitlicher, Abstand zwischen a) dem ersten Minimum und dem Maximum bzw. b) zwischen dem ersten Maximum und dem Minimum, und/oder
zweite Unterstützungsregion, definiert als, insbesondere lokaler oder zeitlicher, Abstand zwischen a) dem Maximum und dem zweiten Minimum bzw. b) zwischen dem Minimum und dem zweiten Maximum.

Insbesondere ist vorgesehen, dass der Blob-Parametersatz mehrere oder alle der folgenden Werte umfasst:

Position des a) Maximums (602) bzw. b) des Minimums;
Extremwert des a) Maximums (602) bzw. b) Minimums;
erster Kontrast (610), definiert als Differenz zwischen den Werten a) des Maximums (602) und eines auf einer ersten Seite liegenden ersten benachbarten Minimums (604) bzw. b) des Minimums und eines auf einer ersten Seite liegenden ersten benachbarten Maximums;

zweiter Kontrast und jeder weitere Kontrast (616), definiert als Differenz zwischen den Werten a) des Maximums (602) und des auf einer zweiten oder jeder weiteren Seite liegenden zweiten oder jedes weiteren benachbarten Minimums (606) bzw. b) des Minimums und des auf der zweiten Seite oder jeder weiteren Seite liegenden zweiten oder jedes weiteren benachbarten Maximums - für n-Dimensionen, wobei n eine natürliche Zahl größer gleich 1 ist - erste Unterstützungsregion (612), definiert als, insbesondere lokaler oder zeitlicher, Abstand zwischen a) dem ersten Minimum (604) und dem Maximum (602) bzw. b) zwischen dem ersten Maximum und dem Minimum, und/oder zweite oder jede weitere Unterstützungsregion (614), definiert als, insbesondere lokaler oder zeitlicher, Abstand zwischen a) dem Maximum (602) und dem zweiten oder jedem weiteren Minimum (606) bzw. b) zwischen dem Minimum und dem zweiten oder jedem weiteren Maximum.

Je nach Anzahl der Dimensionen und der benachbarten Minima (der benachbearten Maxima) können somit auch ein dritter Kontrast oder gegebenenfalls ein vierter Kontrast (eventuell fünfter, sechster...Kontrast) definiert werden, genauso kann es eine höhere Anzahl von Unterstützungsregionen (dritte, vierte, ... Unterstützungsregion) geben.

Gemäß einem weiteren Aspekt schafft die Erfindung ein Modellierungsverfahren zum Modellieren von Eigenschaften einer Mehrzahl von gemessenen oder simulierten Proben eines technischen Systems als wenigstens ein Zufallsfeld, gekennzeichnet durch Parameterisierung des Zufallsfeld mittels des Parameterisationsverfahrens nach einem der voranstehenden Ausbildungen.

Gemäß noch einem weiteren Aspekt schafft die Erfindung ein Simulationsverfahren zum Simulieren eines technischen Systems zwecks Verringerung von realen Experimenten zur Untersuchung des Verhalten des Systems, gekennzeichnet durch Modellierung des technischen Systems mittels des oben genannten Modellierungsverfahrens.

Gemäß einem weiteren Aspekt schafft die Erfindung eine Parameterisationsvorrichtung zur Parameterisierung eines n-dimensionalen Zufallsfeldes, wobei n eine natürliche Zahl gleich oder größer 1 ist, mit:

einer Mustererkennungseinrichtung, die dazu ausgebildet ist, das Zufallsfeld als n-dimensionales Bild zu betrachten und eine Mustererkennung zur Erkennung von Mustern in dem Bild durchzuführen, und
einer Parametersatzerzeugungseinrichtung zum Erzeugen eines Satzes von Parametern auf Basis der durch die Mustererkennungseinrichtung erkannten Muster.

Die Parameterisationsvorrichtung ist zum Durchführen des erfindungsgemäßen Parameterisationsverfahrens ausgebildet.

Insbesondere umfasst die Parameterisationsvorrichtung weiter:

eine Signalfiltereinrichtung zum Filtern eines das Zufallsfeld charakterisierenden diskreten Signals mit einem Gauß-Filter, wobei die Signalfiltereinrichtung dazu ausgebildet ist, das das Zufallsfeld charakterisierende diskrete Signal in unterschiedliche begrenzte Frequenzbänder aufzusplitten, um so eine Transformation in mehrere Skalen durchzuführen,
wobei die Mustererkennungseinrichtung zum Erfassen von Mustern auf unterschiedlichen Skalen ausgebildet ist und wobei die Parametersatzerzeugungseinrichtung zum Erzeugen des Satzes von Parametern aufgrund der auf unterschiedlichen Skalen erfassten Mustern ausgebildet ist.

Die Signalfiltereinrichtung, die Mustererkennungseinrichtung und die Parametersatzerzeugungseinrichtung sind zur Durchführung der oben erläuterten iterativen Verfahrensweisen ausgebildet.

Weiter ist vorgesehen, dass die Mustererkennungeinrichtung eine Blob-Erfassungseinrichtung zur Erfassung von Blobs, insbesondere aufgrund von lokalen Extremwerten, umfasst.

Die Blob-Erfassungseinrichtung ist vorzugsweise zum Durchführen der oben genannten angepassten Blob-Erfassung ausgebildet.

Ein weiterer Aspekt der Erfindung betrifft eine Modellerzeugungsvorrichtung zum Modellieren von Eigenschaften einer Mehrzahl von gemessenen oder simulierten Proben eines technischen Systems als wenigstens ein Zufallsfeld, gekennzeichnet durch eine Parameterisationseinrichtung der oben beschriebenen Art zum Parameterisieren des Zufallsfelds.

Ein weiterer Aspekt der Erfindung betrifft eine Simulationsvorrichtung zum Simulieren eines technischen Systems zwecks Verringerung von realen Experimenten zur Untersuchung des Verhalten des Systems, gekennzeichnet durch eine solche Modellerzeugungsvorrichtung zur Erzeugung eines Modells des technischen Systems.

Die Parameterisationsvorrichtung und deren Einrichtungen können so ausgebildet sein, dass das Parameterisationsverfahren gemäß der Erfindung oder gemäß deren vorteilhaften Ausgestaltungen (z.B. gemäß den Unteransprüchen) damit durchgeführt werden können.

Die vorgenannten Vorrichtungen und Einrichtungen können z.B. mittels Hardware oder Software ausgebildet sein und können z.B. Teil einer entsprechend ausgebildeten und/oder programmierten Datenverarbeitungseinrichtung sein.

Gemäß einem weiteren Aspekt schafft die Erfindung ein Computerprogrammprodukt, das unmittelbar in den internen Speicher eines Computers geladen werden kann, enthaltend Instruktionen zur Durchführung des Verfahrens gemäß der Erfindung und/oder gemäß einer ihrer Weiterbildungen.

Ausführungsbeispiele der Erfindung werden im Folgenden anhand der beigefügten Zeichnungen näher erläutert. Darin zeigt:

Fig. 1     eine schematische Darstellung einer Streuung eines zu simulierenden technischen Systems durch dessen Geometrie;

Fig. 2     eine schematische Darstellung eines ein-dimensionalen Zufallsfeldes;

Fig. 3     eine schematische Darstellung einer Parameterisierung durch ein Merkmal (a) und durch einzelne Werte (b);

Fig. 4     ein Graph zur schematischen Darstellung eines ein-dimensionalen Blobs;

Fig. 5     ein Graph zur Darstellung von lokalen Maxima mit unterstützten Bereichen;

Fig. 6     eine schematische Darstellung eines ein-dimensionalen Blobs gemäß einer besonders bevorzugten Ausgestaltung einer BlobErfassung eines Ausführungsbeispiels der Erfindung;

Fig. 7     eine schematische Übersicht über besonders bevorzugte Ausgestaltungen erfindungsgemäßer Verfahren und Vorrichtungen;

Fig. 8     Graphen zur Annäherung für zwei nachfolgende Skalen;

Fig. 9     Graphen von Beschleunigungskurven;

Fig. 10    eine Darstellung eines binären Baums für zwei Beschleunigungskurven;

Fig. 11    Ultraschall-Scan-Bilder von CFRP-Paneelen;

Fig. 12    Vergleich von dreidimensionalen Binär-Bäumen für ein Modell des Systems von Fig. 11;

Fig. 13    Annäherungen der Proben auf unterschiedlichen Skalen für ein Modell des Systems von Fig. 11.

Im Folgenden werden Verfahren zur Parameterisierung von gemessenen Proben zum Schaffen eines Modells der Eigenschaften einer Vielzahl von Proben als Zufallsfelder durch Einsatz von aus der Bildverarbeitung abgeleiteten Methoden näher beschrieben.

Fig. 1 zeigt ein Beispiel eines zu simulierenden technischen Systems, z.B. ein Rumpfbauteil 100 eines Flugzeugrumpfes 102 aus kohlenstofffaserverstärkten Kunststoffmaterial, dessen Eigenschaften unter unterschiedlichen Betriebs- oder Umweltbedingungen, wie z.B. Belastungen durch Wind, Lasten, Stöße, Temperaturänderungen usw., oder akustische oder aerdynamische Eigenschaften untersucht werden sollen, und eine Detailansicht einer Oberflächenstruktur 104 an einem Punkt davon. Die Oberflächenstruktur 104 kann je nach zu untersuchenden System in der Geometrie mehr oder weniger stark abweichen, wobei die Abweichungen zwischen unterschiedlichen Proben des Rumpfbauteils an unterschiedlichen Stellen unterschiedlich hoch sein können. Solche Abweichungen können größere Einflüsse auf das Systemverhalten haben. Die Abweichungen können z.B. auf realen Abweichungen oder auf Messfehlern bei einer Abtastung des Systems beruhen.

Um die örtlichen/zeitlichen Einflüsse in einem Modell berücksichtigen zu können, wendet man bei einem hier in Rede stehenden Modellierungsverfahren zum Schaffen eines Modells des zu untersuchenden technischen Systems Zufallsfelder an.

Ein einfaches Beispiel für ein eindimensionales Zufallsfeld ist in Fig. 2 wiedergegeben. Das System hat eine Länge L. Mit r ist der Positionsvektor wiedergegeben. Entlang dieser Länge L liegt ein Merkmal je nach Lage mehr oder weniger wahrscheinlich vor. Das Zufallsfeld wird somit durch eine Funktion $F = H(r)$ wiedergegeben. Es gilt nun, diese Funktion mit möglichst wenig Aufwand durch Parameter zu charakterisieren. Dies ist z.B. einfach bei einer Gauß'schen Verteilung, da eine solche Verteilung sich durch sehr wenige Parameter, wie Mittelwert und Kovarianz beschreiben lassen. Gauß'sche Zufallsfelder sind aber zur Darstellung vieler realer struktureller Merkmale und Konnektivitäten ungeeignet.

Es soll daher ein Verfahren und eine Vorrichtung entwickelt werden, mit denen man aus einem durch gemessene oder auch simulierte Signale charakterisierten Zufallsfeld Parameter erzeugen kann, die die Eigenschaften des Systems modellieren können.

Es wird hierzu ein Parameterisationsverfahren zur Parameterisierung eines n-dimensionalen Zufallsfeldes, wobei n eine natürliche Zahl gleich oder größer 1 ist, vorgeschlagen, bei dem das Zufallsfeld als n-dimensionales Bild betrachtet wird und eine Mustererkennung zur Erkennung von Mustern in dem Bild durchgeführt wird, um einen Satz von Parametern auf Basis der erkannten Muster zu erzeugen.

Mustererkennungen sind auf dem Gebiet der Bildverarbeitung und auf dem Gebiet des künstlichen Sehens bekannt.

Vorzugsweise werden auf das hier vorliegende Anwendungsgebiet besonders angepasste Mustererkennungen durchgeführt. Dies wird im Folgenden näher erläutert.

Gemäß einer weiteren Idee wird ein dem Zufallsfeld zu Grunde liegendes Signal mittels einer Filtereinrichtung, insbesondere Hochpass- oder Tiefpassfilter, mehr insbesondere Gaußfilter, gefiltert, um so Signale auf unterschiedlichen Skalen zu erhalten. Durch Durchführen der Mustererkennung auf den unterschiedlichen Skalen lassen sich den unterschiedlichen Skalen zugeordnete Parametersätze erzeugen, um so das System mit mehr oder weniger großer Genauigkeit (einhergehend mit mehr oder weniger großem Rechenaufwand) zu beschreiben und/oder zu modellieren.

Vier allgemeine Einschränkungen oder Axiome können für die Parameterisierung von willkürlich strukturierten Morphologien formuliert werden: Ähnlichkeit, Strukturerhalt, Lokalität und Reversibilität. Es werden Parameterisierungsverfahren bevorzugt, die diese Einschränkungen erfüllen.

Ähnlichkeit:

Die Parameterisierungsmethode ist ähnlich, wenn ähnliche Proben in dem Merkmalsraum zu ähnlichen Parametersätzen in dem Parameterraum führen. Kleine Abweichungen in dem Merkmalsraum sollten deswegen in dem Parameterraum zu Abweichungen für eine begrenzte Anzahl von Parametern führen. Deswegen ist es vorteilhaft, wenn die Parameter unabhängig voneinander sind. Eine Konsequenz der Ähnlichkeit ist eine Forderung nach einer im Wesentlichen vollständigen Transformation. Für eine unvollständige Transformation kann die Ähnlichkeit nicht sichergestellt werden, wenn bestimmte Merkmale nicht einfließen.

Strukturerhalt/Strukturkonservation:

Strukturen in dem Probenraum sollen in den Parameterraum explizit so aufgenommen sein, dass Form und Konnektivität erhalten bleiben. Die Strukturerhalteigenschaft kann durch ein einfaches Beispiel dargestellt werden.

In Fig. 3 ist ein Satz von Bohrlöchern 80-83 in der x-y-Ebene gezeigt. Zwei unterscheidliche Parameterisationen werden durchgeführt. Für eine Parameterisation, die für jeden einzelnen Wert durchgeführt wird, bleibt die Struktur des Bohrloches nicht erhalten. Stattdessen wird eine verschwommene Einbeulung gezeigt, siehe Darstellung (b). Eine bessere Darstellung kann erhalten werden, wenn man den Mittelpunkt als ein zu parameterisierendes Merkmal herannimmt (a). Für dieses Merkmal kann eine Verteilung der Position in der x-Richtung und der y-Richtung berechnet werden.

Lokalität:

Lokalität bedeutet, dass lokale Variationen in dem Merkmalsraum zu einer Variation der lokal limitierten Parameter in dem Parameterraum führen. Diese Einschränkung ist deswegen mit der Ähnlichkeitseigenschaft verbunden, da möglichst unabhängige Parameter gefordert werden.

Reversibilität:

Für jede Transformation $f(S_{in}) = P$ wird eine inverse Transformation $f^{-1}(P) = S_{out}$ mit $|S_{in} - S_{out}| < \varepsilon_{approx}$ gefordert, um synthetische Proben zu ermöglichen.

Eine vorgeschlagene Methode basiert auf der sogenannten Skalenraumtheorie, die die kontinuierlichen Skalenparameter $t \in R_+$ verwendet, siehe hierzu Literatur [2]. Für kontinuierliche Signale $f: R^N \rightarrow R$ mit $x \in R^N$ ist die Skalenraumdarstellung $L: R^N \times R_+ \rightarrow R$ definiert an der Skala t=0

$$L(x; 0) = f(x). \qquad (1)$$

Für grobere Skalen ist die Skalenraumdarstellung durch die Faltung des Signals mit Gauß'schen Kernfunktionen

definiert durch

$$L(x; t) = G(x; t) * f(x), \qquad (2)$$

wobei $G: R^N \times R_+ \setminus \{0\} \to R$ die Gauß'sche Kernfunktion

$$G(x; t) = \frac{1}{(2\pi t)^{N/2}} e^{\frac{-x^T x}{2t}}.\qquad (3)$$

ist.

Eine grobe Skala (mit hoher Filtervarianz) ist eine vereinfachte Version der feineren Skala, und daher ist eine Kaskadierung möglich. Der Filter sollte die Skalenraumaxiome erfüllen: Nicht-Erzeugung von lokalen Extremen, Nicht-Verstärkung von lokalen Extremen und Skala-Invarianz. Die Gauß'sche Kernfunktion ist der einzige bisher bekannte Filter, der diese Axiome erfüllt.

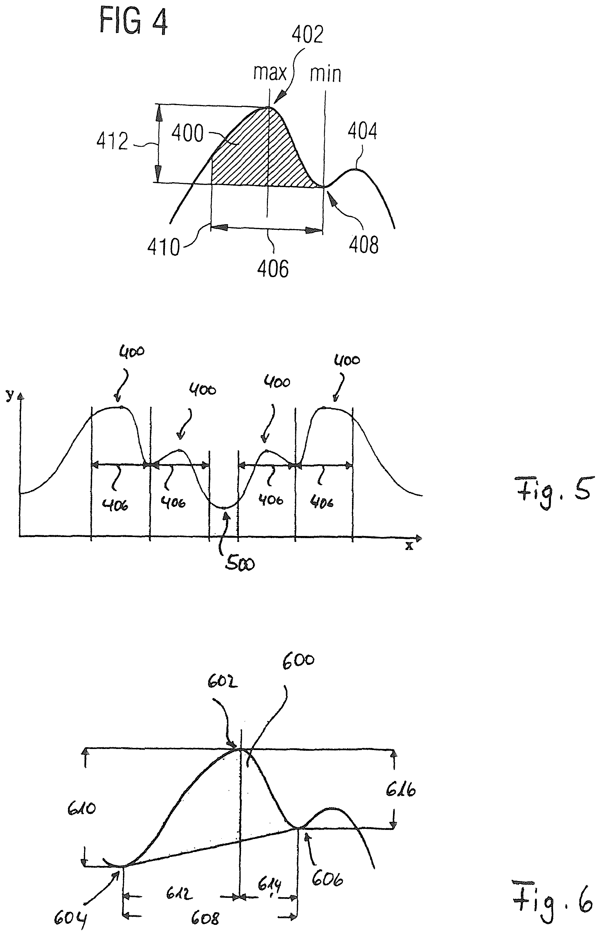

Basierend auf dem diskreten Skalenraum gibt es auf dem Gebiet des künstlichen Sehens ein Mustererkennungsverfahren: Die sogenannte Skalenraumurskizze (engl.: scale-space primal sketch, kurz: SSPS) - siehe Literaturstelle [3]. Die Mustererkennung schließt nicht alle Skalen, sondern nur diskrete Skalen ein. Die Grundlage für die Mustererkennung ist eine sogenannte "Blob-Erfassung", siehe Fig. 4. Ein Blob 400 ist ein lokaler Extremwert, z.B. ein lokales Maximum 402 des Signals 404 zusammen mit allen Werten innerhalb einer "Unterstützungsregion" 406. Die Unterstützungsregion 406 wird z.B. durch das näheste lokale Minimum 408 und dessen bezüglich des lokalen Maximums 402 symmetrischen Wert 410 begrenzt. Ein Kontrast 412 des Blobs wird z.B. durch die Differenz zwischen dem lokalen Maximum 402 und dem begrenzenden lokalen Minimum 408 bestimmt. Fig. 4 zeigt ein Beispiel für einen ein-dimensionalen Blob gemäß der aus [3] bekannten Mustererkennung.

Blobs auf feineren Skalen können mit einem Blob auf einer groberen Skala in gegenseitige Beziehung gebracht werden, wenn ihr Maximum innerhalb der Unterstützungsregion des Blobs der groberen Skala liegen. Die dadurch abgeleitete oder erhaltene Struktur kann als ein binärer Baum beschrieben werden. Die SSPS ist eine Mustererkennungsmethode, die teilweise die oben genannten Bedingungen erfüllt. Die Struktur ist konserviert und lokale Variationen führen zu lokal variierenden Parametern. Die Ähnlichkeit ist nur teilweise erfüllt, da einige Merkmale durch die existierende Blob-Detektion möglicherweise nicht in den Parameterraum aufgenommen werden, wie dies in Fig. 5 gezeigt ist: ein lokales Minimum 500, das keinen Blob 400 begrenzt, wird nicht für die Parameterisierung in Betracht gezogen. Deswegen ist eine inverse Transformation nicht möglich, und die gewünschte Reversibilität ist nicht erfüllt.

Fig. 5 zeigt Blobs 400 mit Unterstützungsregionen 406; wobei ein lokales Minimum 500 existiert, das außerhalb der Unterstützungsregionen 406 liegt. Dieses lokale Minimum 500 wird bei der SSPS nicht in Betracht gezogen.

Daher wird bei einer Ausführungsform des hier beschriebenen Parameterisierungsverfahrens eine angepasste Blob-Erfassung durchgeführt, wie sie im Folgenden näher beschrieben wird.

Basierend auf der SSPS haben die Erfinder das sogenannte Näherungsdifferentialskalenraum-Verfahren (engl.: approximated differential scale-space, kurz: ADSS) entwickelt, welches alle oben genannten Bedingungen erfüllt. Ein Ziel ist, ein Mehrfach-Skala-Transformationsverfahren zu entwickeln, das eine Rekonstruktion von hochstrukturierten Morphologien ermöglicht. Eine Idee ist, dass es möglich ist, einen Satz von Parametern für jede Skala abzuleiten, der für eine Annäherung des Originalsignals verwendet werden kann. Die gröberen Skalen berücksichtigen die globale Struktur des Signals. Die feineren Skalen stellen die feinen Signalstrukturen dar.

In einem ersten Schritt wird die Blob-Erfassung angepasst, um eine vollständige Annäherung des Signals auf jeder einzelnen Skala zu ermöglichen. Ein Beispiel für eine solche angepasste Blob-Erfassung ist in Fig. 6 dargestellt. Der Parametersatz für jeden Blob 600 wird von vier Werten (Position, Extremwert, Kontrast und Unterstützungsregion) auf sechs Werte (Position, Extremwert, Kontrast links, Kontrast rechts, Unterstützungsregion links und Unterstützungsregion rechts) erweitert - siehe Fig. 6.

Fig. 6 zeigt ein Beispiel für eine Blob-Erfassung nach ADSS mit den Definitionen der verschiedenen Werte. Es werden somit das jeweilige lokale Maximum 602 und die benachbarten lokalen Minima 604, 606 in Betracht gezogen. Die Unterstützungsregion 608 reicht über den Bereich zwischen den beiden das lokale Maximum 602 begrenzenden lokalen Minima 604, 606. Der Kontrast links 610 reicht von dem linken lokalen Minimum 604 bis zu dem Extremwert des lokalen Maximums 602. Die Unterstützungsregion links 612 reicht von dem Ort des links begrenzenden lokalen Minimums 604 bis zu dem Ort des lokalen Maximums 602. Entsprechend reicht die Unterstützungsregion rechts 614 von dem Ort des lokalen Maximums 602 bis zu dem Ort des rechts begrenzenden lokalen Minimums 606, während der Kontrast rechts 616 durch den Wert des rechten lokalen Minimums 606 und dem Extremwert des lokalen Maximums 602 bestimmt wird.

Da dieser Ansatz sicherstellt, dass jeder Blob 600 an den nächsten benachbarten Blob 600 angrenzt, ist es nicht notwendig, die zusätzlichen Werte zu speichern. Diese Werte können von dem angrenzenden Blob 600 rekonstruiert werden. Die einzigen Ausnahmen bilden die Grenz-Blobs an den jeweiligen äußersten Enden. Für alle Skalen wird jede Subdomain eines Signals einem lokalen Maximum zugeordnet.

Die Definition des ADSS-Blobs 600 ermöglicht eine Signal-Rekonstruktion auf jeder Skala. Natürlich ist die auf einer feineren Skala basierende Konstruktion genauer als die auf einer groberen Skala basierende Annäherung. Die in den groberen Skalen enthaltene Information ist implizit vollständig bei den feineren Skalen enthalten. Jedoch führt dies zu einer unidirektionalen Abhängigkeit. Ein Vorteil des Mehrfach-Skala-Ansatzes ist die Möglichkeit, Skalen bis zu einem bestimmten Feinheitsgrad für die Synthese von Simulations-Proben zu nutzen. Daher wäre die Möglichkeit, die Parameter jeder Skala unabhängig zu behandeln, vorteilhaft.

Ein Ansatz hierfür ist, den Informationsgehalt des Signals $\tilde{S}_0$, der bereits durch die Annäherung $\tilde{S}_i$ für die Skala i abgedeckt ist, durch Berechnung der Differenz $E_i$ zu entfernen:

$$E_i = (E_{i-1} - \tilde{S}_i); \quad S_{i+1} = G_i * E_i. \tag{4}$$

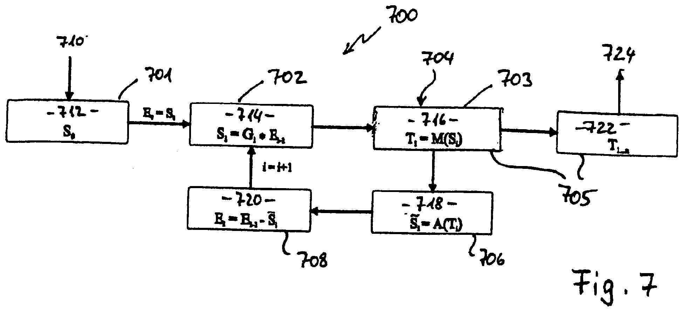

Der iterative Prozess für die Parameterisierung durch ADSS sowie eine Vorrichtung zur Durchführung ist schematisch in Fig. 7 gezeigt. Für den iterativen Prozess wird der Unterschied zwischen der mustererkennungsbasierten Annäherung und dem Eingangssignal der Iteration berechnet. Für jede Iteration wird ein Parametersatz Ti gespeichert, der für eine Rekonstruktion verwendet werden kann. Die Iteration wird beendet, wenn ein bestimmter Schwellwert ε für die Differenz erreicht worden ist. Eine brauchbare Metrik zur Darstellung der Differenz als einzelner Skalenwert ist z.B. der mittlere quadratische Fehler.

Fig. 7 zeigt die schematische Prozessübersicht über das ADSS-Verfahren. Die einzelnen Blöcke und Bezugszahlen bedeuten:

700  Parameterisationsvorrichtung
701  Signalerfassungseinrichtung
702  Signalfiltereinrichtung
703  Mustererkennungseinrichtung
704  Blob-Erfassungseinrichtung
705  Parametersatzerzeugungseinrichtung
706  Annäherungseinrichtung
708  Differenzberechnungseinrichtung
709  Modellierungsvorrichtung
710  Eingang oder Eingabe
712  Signal ($S_0$)
714  Gauß-Filter ($S_i = G_i * E_{i-1}$)
716  Mustererkennung ($T_i = M(S_i)$)
718  Annäherung ($\tilde{S}_i = A(T_i)$)
720  Differenz ($E_i = E_{i-1} - \tilde{S}_i$)
722  Parametersatz ($T_{1...a}$).
724  Ausgabe
730  Simulationsvorrichtung

Die einzelnen Vorrichtungen und Einrichtungen 700 bis 709 können als Software innerhalb einer Datenverarbeitungsanlage (nicht dargestellt), wie insbesondere Computer, ausgebildet sein. Die Parameterisationsvorrichtung 700 liefert als Ausgabe 724 einen Parametersatz ($T_{1...a}$). Dieser Parametersatz kann als Basis für ein Modell des zu simulierenden technischen Systems verwendet werden. Der Parametersatz kann beispielsweise gespeichert werden und in eine Modellierungsvorrichtung 709 zur Erstellung des Modells eingegeben werden. Die Modellierungsvorrichtung 709 kann Teil einer Simulationsvorrichtung 730 sein. Die Modellierungsvorrichtung 709 und die Simulationsvorrichtung 730 können softwareimplementiert durch eine Datenverarbeitungsanlage (nicht dargestellt) realisiert werden. Z.B. lässt sich mit auf dem Gebiet der Simulation technischer Systeme bekannten Verfahren aus dem Parametersatz ein Modell erzeugen, mit dem dann Simulationsrechnungen durchgeführt werden, um Systemverhalten und Ansprechverhalten zu simulieren. Gemäß einer Ausgestaltung kann die Parameterisationsvorrichtung 700 Teil der Modellierungsvorrichtung 709 sein, die wiederum Teil der Simulationsvorrichtung 730 ist. Der Parametersatz 722 kann aber auch auf Datenträger oder dergleichen gespeichert werden und in einer gesonderten Modellerzeugungsvorrichtung oder Simulationsvorrichtung eingesetzt werden.

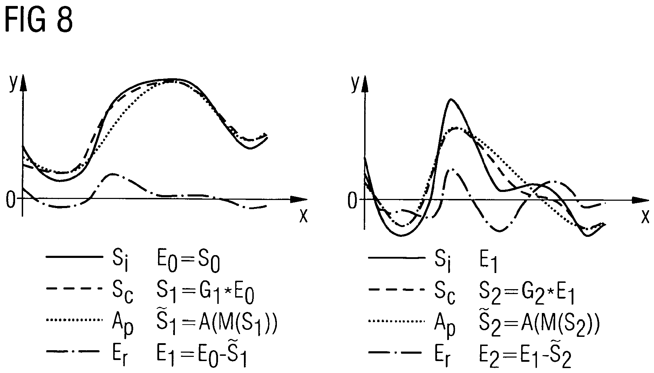

Die zwischen dem Signal $E_{i-1}$ und der Annäherung $\tilde{S}$ als direkte Berechnung berechnete Differenz $E_i$ würde zu einer Aufsummierung der Näherungsfehler für jede Skala führen. Der Fehler für jede Skala besteht aus einem Fehler aufgrund der Filterung und einem Fehler aufgrund der Annäherung. In Fig. 8 ist eine Annäherung für zwei aufeinander folgende Skalen gezeigt. Für die erste Skala tritt ein Unterschied zwischen dem Eingangssignal Eo und der gefilterten Skala $S_1$ auf. Basierend auf der gefilterten Skala der Mustererkennung $M(S_1)$ wird mittels des ADSS-Verfahrens eine Blob-Erfassung durchgeführt. Der abgeleitete Parametersatz wird für die Annäherung des Signals verwendet. Der Unterschied zwischen dem Eingabesignal und der Annäherung wird als ein Eingangssignal für die nachfolgende Skala verwendet. Dies ist in Fig. 8 dargestellt, die die Annäherung für zwei nachfolgende Skalen (hier Skala 1 und Skala 2, dies lässt sich zur Verallgemeinerung auf eine i-te Skala und eine nachfolgende (i+1)-te Skala übertragen).

In Fig. 8 bedeutet die Beschriftung der einzelnen Kurven:

Si    Signal
Sc    Skala
Ap    Annäherung
Er    Fehler.

Der Fehler $E_i$ der i-ten Skala wird als Differenz des Eingangssignal $E_{i-1}$ der i-ten Skala und der Annäherung des Signals berechnet und dann als Eingangssignal für die (i+1)-te Skala herangezogen.

Die Annäherung $A(M(S_i))$ erfolgt unter Heranziehung des Parametersatzes $T_i$ durch ein Einsetzen der Werte in eine Musterfunktion für das typische Muster. Z.B. wird ein Annäherungssignal durch einen typisierten Blob mit den zuvor ermittelten Blob-Parametern (Extremwert, Position, Unterstützungsregion rechts, Unterstützungregion links, Kontrast links, Kontrast rechts) gebildet.

Ein systematischer Fehler aufgrund des Filterns ergibt sich aus den im Vergleich zu dem Signal Eo kleineren Extremwerten der Skala $S_1$. Dieser systematische Fehler kann reduziert werden, wenn die Signalwerte für alle Positionen $p(j)$ der Parameter der feinsten Skala $T_n(j)$ gespeichert werden:

$$T_n(j) = S_0(p(j)) \quad \forall J \in T_n. \tag{5}$$

Für verrauschte Signale wird der Mustererkennungsalgorithmus eine hohe Anzahl von lokalen Extremen detektieren. Dies wird zu einem großen Parametersatz führen. Für einen kompakten Parametersatz sollten diese unerheblichen Extreme weggelassen werden. Dies lässt sich über Schwellwerte erreichen: z.B. wird für den Kontrast basierend auf dem Schwellwert $\varepsilon$ und der Konstanten c gefordert:

$$Contrast(T_i(j)) > \frac{\varepsilon}{c} \quad \forall j \in T_i. \tag{6}$$

Das verbleibende Rauschen, welches als Gauß-verteilt (normal verteilt) angenommen wird, wird durch Mittelwert- und Standardabweichung modelliert und als zusätzliche Parameter TNj gespeichert.

Um die Parameterisierung mittels ADSS zu demonstrieren, werden im Folgenden zwei Anwendungsbeispiele dargestellt. Die erste Anwendung ist ein Beispiel für eine ein-dimensionale Probe und ist ein Satz von Beschleunigungskurven aus einem Schlittentest. Die zweite Anwendung ist ein Satz von zwei-dimensionalen Ultraschallabtastungen von kohlenstofffaserverstärkten Kunststoffpaneelen - engl.: carbon fibre-reinforced plastic (im Folgenden kurz: CFRP) panels. Die Anwendungsbeispiele werden verwendet, um zu zeigen, dass die oben dargestellten bevorzugten Bedingungen Ähnlichkeit, Strukturkonservierung, Lokalität und Reversibilität durch das ADSS-Verfahren erfüllt sind.

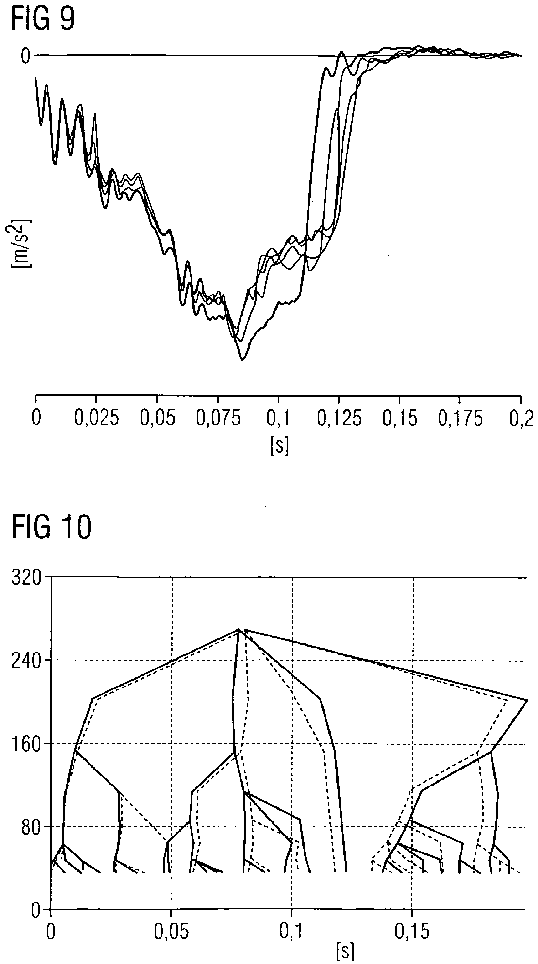

Fig. 9 zeigt die Beschleunigung für neun unterschiedliche Kurven, die ihr stochastisches Verhalten aufzeigen.

Fig. 10 zeigt die Binärbäume der Beschleunigungskurve 1 und der Beschleunigungskurve 2. Auf der Abszisse ist die Zeit dargestellt. Auf der Ordinate ist die Varianz des Gauß'schen Filters spezifiziert. Für die gröbste Skala führt das Filtern zu einem einzelnen Blob, der durch den Mustererkennungsalgorithmus aufgefunden worden ist. Für feinere Skalen steigt die Anzahl von Blobs an. Die Zuordnung der Blobs von feineren Skalen zu den Blobs der groberen Skala basiert auf der Unterstützungsregion. Der binäre Baum zeigt die Ähnlichkeit auf. Für hohe Varianzen sind die lokalen Maxima ähnlich oder im Wesentlichen gleich. Auf den feineren Skalen zeigen die lokalen Maxima eine höhere Abweichung. Diese Beobachtung zeigt auch die Lokalitätseigenschaft, die eng mit der Ähnlichkeit verknüpft ist.

Die Untersuchung der Relativpositionen der Spitzenbeschleunigungen in dem Merkmalsraum und in dem Parameterraum zeigen, dass in beiden Räumen der relative Zeit-Offset erhalten bleibt (konserviert ist). Dies zeigt, dass die Struktur in dem Parameterraum konserviert ist, wie dies für eine Darstellung von hochstrukturierten Morphologien erwünscht ist.

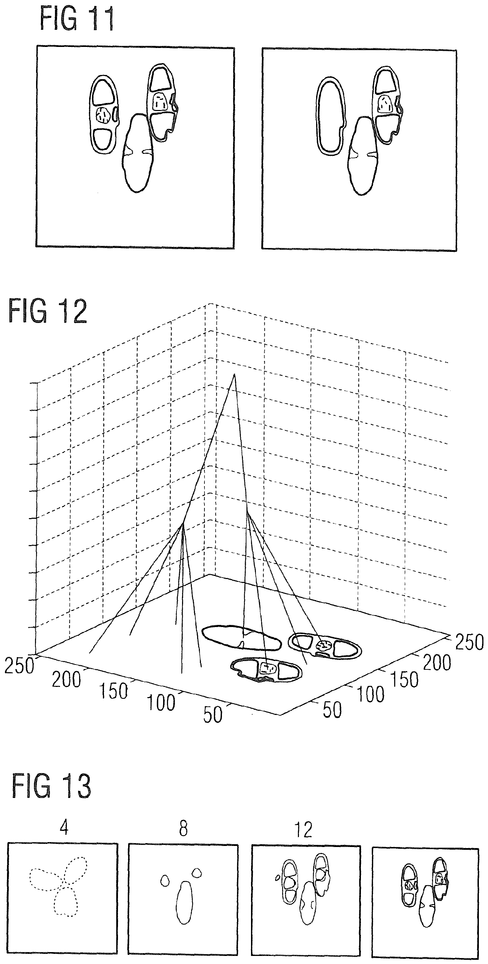

Fig. 11 zeigt Darstellungen von Ultraschall-Abtastungen von CFK-Paneelen als Beispiel für eine zwei-dimensionale Probe, die zu simulieren ist. Als zweidimensionales Beispiel werden somit Ultraschall-Abtastungen von kohlenstofffaserverstärkten Kunststoffpaneelen verwendet, die hochkomplex strukturierte Morphologien aufweisen.

In den Ultraschall-Abtastungen kann man Abweichungen der Faserorientierung in der Matrix, Kavitäten und schwerwiegende Beschädigungen aufgrund von Stoßbelastungen identifizieren. Dies führt zu feinen Kornstrukturen sowie zu groben Strukturen mit und ohne Richtungsabhängigkeiten.

In Fig. 11 sind zwei Proben abgebildet. Auf der linken Seite ist die Originalabtastung einer Probe dargestellt. Auf der rechten Seite ist die Probe lokal an einem der beschädigten Bereiche manipuliert worden. Für beide Seiten wird eine Parameterisierung mittels ADSS durchgeführt, und die drei-dimensionalen Binärbäume werden erhalten. In Fig. 12 sind beide Binärbäume für die ersten drei Skalen übereinander gelegt.

Fig. 12 stellt einen Vergleich der beiden drei-dimensionalen Binärbäume dar.

Auf den ersten beiden Skalen sind die Parameter identisch. Auf der dritten Skala tritt ein Unterschied in den Parametern aufgrund der lokalen Manipulation der zweiten Probe auf. Dies zeigt, dass die Parameterisierung die Ähnlichkeits- und die Lokalitätsbedingung erfüllt und somit die Parameter unabhängig voneinander sind.

Fig. 13 stellt die Reversibilität und die Fähigkeit des Mehrfachskalenansatzes dar, Proben mit unterschiedlichen Genauigkeitsgraden in Betracht zu ziehen.

Fig. 13 zeigt die Annäherung von Proben auf unterschiedlichen Skalen, wobei ganz links eine Darstellung auf der Skala 4, daneben eine Darstellung auf der Skala 8, daneben eine Darstellung auf der Skala 12 und ganz rechts eine Darstellung der Probe gezeigt ist.

Die Originalprobe wird auf unterschiedlichen Skalen kumulativ angenähert. Dies demonstriert, dass eine vollständige Rekonstruktion auf jeder Skala möglich ist. Selbst bei den groberen Skalen kann die typische Struktur der Originalprobe identifiziert werden. Welcher Genauigkeitsgrad in Betracht gezogen wird, hängt von der Anwendung ab. Eine Begrenzung könnte die Parametersatzgröße darstellen, insbesondere für große, hochdimensionale Proben. Eine weitere Begrenzung könnte z.B. die stochastische Simulation darstellen, da die Granularität des Zufallsfeldes eng mit der Diskretisierung (z.B. Netzfeinheit bei FEM, CFD) verknüpft ist.

Insgesamt ist somit eine mustererkennungsbasierte Parameterisierung von Zufallsfeldern vorgeschlagen worden. Mit dem vorgeschlagenen Verfahren wird ein Ansatz zur mustererkennungsbasierten Parameterisierung formuliert, insbesondere das Näherungsdifferentialskalenraum-Verfahren (ADSS). Eine bevorzugte vorgeschlagene Verfahrensweise ist ein Mehrfachskalenansatz oder eine Mehrfachskalennäherung, die das Verfahren gut für die Parameterisierung von Zufallsfeldern geeignet macht, die eine hochstrukturierte Morphologie besitzen. Aufgrund der Mehrfachskalennäherung können Merkmale auf unterschiedlichen Skalen in den Parameterraum aufgenommen werden. Die einzusetzenden Proben können von Messungen (z.B. ZFP-Abbildungen - zerstörungsfreie Prüfmethoden) sowie aus Simulationen erhalten werden.

Vier allgemeine Axiome werden aufgestellt, die vorzugsweise für die Parameterisierung von nicht homogenen, hochstrukturierten Morphologien Bedingungen darstellen: Ähnlichkeit, Strukturkonservierung, Lokalität und Reversibilität. Für ein-dimensionale und zwei-dimensionale Anwendungsbeispiele ist gezeigt worden, dass die ADSS diese bevorzugten Bedingungen erfüllt. Die erzeugten Parametersätze enthalten die charakteristischen Merkmale getrennt durch Ort und Frequenz.

Aufgrund der Unabhängigkeit der Parameter ist es möglich, die Proben auf jeder Skala zu synthetisieren, um so unterschiedliche Genauigkeitsgrade in Betracht ziehen zu können. Das vorgeschlagene ADSS-Verfahren kann für Anwendung jeder Dimensionalität eingesetzt werden, da es keine methodische Begrenzung auf die Anzahl der Dimensionen gibt. Die Komplexität der Berechnungen erhöht sich linear mit der Dimension.

Vorteile sind insbesondere:

- Die Verwendung von Mustererkennung führt zu einer erheblichen Verringerung der Arbeitsbelastung des Ingenieurs beim Modellieren von komplexen, heterogenen, nicht normal verteilten Zufallsfeldern.
- Eine vollständige Charakterisierung von Merkmalen durch einen Satz von Parametern ist für willkürliche Proben möglich.
- Eine Mehrfachskalaannäherung ermöglicht eine Modellierung auf unterschiedlichen Skalen, um z.B. den Diskretisierungsgrad in Betracht zu ziehen.
- Es gibt keine methodische Einschränkung hinsichtlich der Dimensionalität der Probe oder der Komplexität der strukturellen Morphologie. Das Verfahren kann auf gemessene Proben (z.B. zerstörungsfreie Abbildungen wie Ultraschall, Röntgenstrahlung, Thermographie, usw.) sowie auf simulierte Proben (z.B. Simulation eines Herstellungsprozesses: Tiefziehen, Gießen, Spritzgießen, usw.) angewandt werden.

**Patentansprüche**

1. Parametrisationsverfahren zur Parametrisierung eines n-dimensionalen Zufallsfeldes, wobei n eine natürliche Zahl gleich oder größer 1 ist, mit den Schritten:

   Betrachten des Zufallsfeldes als n-dimensionales Bild und Durchführung einer Mustererkennung (716) zur Erkennung von Mustern in dem Bild, wobei die Mustererkennung (716) eine Blob-Erfassung umfasst,
   Erzeugen eines Satzes von Parametern (722) auf Basis der erkannten Muster, Filtern eines das Zufallsfeld charakterisierenden diskreten Signals (712) mittels eines Gauß-Filters (714) zum Aufteilen des Signals in unterschiedliche begrenzte Frequenzbänder, um so eine Transformation in mehrere Skalen durchzuführen,
   Erfassen von Mustern auf unterschiedlichen Skalen,
   Erzeugen des Satzes von Parametern (722) aufgrund der auf unterschiedlichen Skalen erfassten Muster,
   Durchführen der Schritte Filtern und Erfassen von Mustern iterativ nacheinander für unterschiedliche Skalen, um so Parametersätze (722) für unterschiedliche Skalen zu erhalten,

   wobei für eine i-te Skala und eine nachfolgend in der Iteration folgende (i+1)-te Skala die Schritte durchgeführt werden:

   a) Filtern eines Eingangssignals $E_{i-1}$, um das i-te Signal $S_i$ der i-ten Skala zu erhalten,
   b) Erzeugen des Parametersatzes Ti durch Durchführen einer Mustererkennung an dem i-ten Signal $S_i$,

   **gekennzeichnet durch** die Schritte:

   c) Annähern (718) des i-ten Signals $S_i$ unter Verwendung des Parametersatzes $T_i$, insbesondere **durch** eine zu der Mustererkennung inverse Transformation A, um ein angenähertes Signal $\tilde{S}_i$ zu erhalten,
   d) Verwenden einer Differenz $E_i = E_{i-1} - \tilde{S}_i$ zwischen dem Eingangssignal $E_{i-1}$ und dem angenäherten Signal $\tilde{S}_i$ als Eingangssignal $E_i$ für die (i+1)-te Skala, und Durchführen der Schritte a) bis c) für die (i+1)-te Skala.

2. Parameterisationsverfahren nach Anspruch 1,
   **dadurch gekennzeichnet,**
   **dass** die Blob-Erfassung umfasst:

   Erfassen von lokalen Maxima (602) und Minima (604, 606),
   Definieren von Blobs (600) anhand der erfassten lokalen Maxima (602) und Minima (604, 606), wobei entweder a) ein lokales Maximum (602) oder b) ein lokales Minimum sowie Werte in einer Unterstützungregion (608) um das Maximum (602) bzw. Minimum einen Blob (600) darstellen,
   wobei die Unterstützungsregion (608) im Fall a) durch jeweils benachbarte lokale Minima (604, 606) und im Fall b) durch jeweils benachbarte lokale Maxima begrenzt wird, und
   Erzeugen eines Blob-Parametersatzes pro Blob (600) aus den Eigenschaften des Blobs (600).

3. Parameterisationsverfahren nach Anspruch 2,
   **dadurch gekennzeichnet,**
   **dass** der Blob-Parametersatz mehrere oder alle der folgenden Werte umfasst:

   Position des a) Maximums (602) bzw. b) des Minimums;
   Extremwert des a) Maximums (602) bzw. b) Minimums;
   erster Kontrast (610), definiert als Differenz zwischen den Werten a) des Maximums (602) und eines auf einer ersten Seite liegenden ersten benachbarten Minimums (604) bzw. b) des Minimums und eines auf einer ersten Seite liegenden ersten benachbarten Maximums;
   zweiter Kontrast (616), definiert als Differenz zwischen den Werten a) des Maximums (602) und des auf einer zweiten Seite liegenden zweiten benachbarten Minimums (606) bzw. b) des Minimums und des auf der zweiten Seite liegenden zweiten benachbarten Maximums;
   erste Unterstützungsregion (612), definiert als, insbesondere lokaler oder zeitlicher, Abstand zwischen a) dem ersten Minimum (604) und dem Maximum (602) bzw. b) zwischen dem ersten Maximum und dem Minimum, und/oder zweite Unterstützungsregion (614), definiert als, insbesondere lokaler oder zeitlicher, Abstand zwischen a) dem Maximum (602) und dem zweiten Minimum (606) bzw. b) zwischen dem Minimum und dem zweiten Maximum.

4. Modellierungsverfahren zum Modellieren von Eigenschaften einer Mehrzahl von gemessenen oder simulierten Proben eines technischen Systems als wenigstens ein Zufallsfeld, **gekennzeichnet durch** Parameterisierung des Zufallsfeld mittels des Parameterisationsverfahrens nach einem der voranstehenden Ansprüche.

5. Simulationsverfahren zum Simulieren eines technischen Systems zwecks Verringerung von realen Experimenten zur Untersuchung des Verhalten des Systems, **gekennzeichnet durch** Modellierung des technischen Systems mittels des Modellierungsverfahrens nach Anspruch 4.

6. Parameterisationsvorrichtung (700) zur Parameterisierung eines n-dimensionalen Zufallsfeldes, wobei n eine natürliche Zahl gleich oder größer 1 ist, mit:

einer Mustererkennnungseinrichtung (703), die dazu ausgebildet ist, das Zufallsfeld als n-dimensionales Bild zu betrachten und eine Mustererkennung zur Erkennung von Mustern in dem Bild durchzuführen, wobei die Mustererkennungeinrichtung (703) eine Blob-Erfassungseinrichtung (704) zur Erfassung von Blobs (600) umfasst, eine Parametersatzerzeugungseinrichtung (705) zum Erzeugen eines Satzes von Parametern (722) auf Basis der durch die Mustererkennungseinrichtung (703) erkannten Muster, eine Signalfiltereinrichtung (702) zum Filtern eines das Zufallsfeld charakterisierenden diskreten Signals (712) mit einem Gauß-Filter (714), wobei die Signalfiltereinrichtung (702) dazu ausgebildet ist, das das Zufallsfeld charakterisierende diskrete Signal (712) in unterschiedliche begrenzte Frequenzbänder aufzuteilen, um so eine Transformation in mehrere Skalen durchzuführen, wobei die Mustererkennungseinrichtung (703) zum Erfassen von Mustern auf unterschiedlichen Skalen ausgebildet ist und wobei die Parametersatzerzeugungseinrichtung (705) zum Erzeugen des Satzes von Parametern (722) aufgrund der auf unterschiedlichen Skalen erfassten Mustern ausgebildet ist,

wobei die Parametrisationsvorrichtung dazu ausgebildet ist, das Filtern und das Erfassen von Mustern iterativ nacheinander für unterschiedliche Skalen durchzuführen, um so Parametersätze (722) für unterschiedliche Skalen zu erhalten, und weiter dazu ausgebildet ist, für eine i-te Skala und eine nachfolgend in der Iteration folgende (i+1)-te Skala die Schritte durchzuführen:

a) Filtern eines Eingangssignals Ei-1, um das i-te Signal Si der i-ten Skala zu erhalten,
b) Erzeugen des Parametersatzes Ti durch Durchführen einer Mustererkennung an dem i-ten Signal,

**gekennzeichnet durch**:

c) Annähern (718) des i-ten Signals Si unter Verwendung des Parametersatzes Ti, insbesondere **durch** eine zu der Mustererkennung inverse Transformation A, um ein angenähertes Signal zu erhalten,
d) Verwenden einer Differenz zwischen dem Eingangssignal Ei-1 und dem angenäherten Signal als Eingangssignal Ei für die (i+1)-te Skala, und Durchführen der Schritte a) bis c) für die (i+1)-te Skala.

7. Parameterisationsvorrichtung (700) nach Anspruch 6,
**dadurch gekennzeichnet,**
**dass** die Blob-Erfassungseinrichtung (704) zur Erfassung von Blobs (600) aufgrund von lokalen Extremwerten (602, 604, 606) ausgebildet ist.

8. Modellerzeugungsvorrichtung (709) zum Modellieren von Eigenschaften einer Mehrzahl von gemessenen oder simulierten Proben eines technischen Systems als wenigstens ein Zufallsfeld, **gekennzeichnet durch** eine Parameterisationseinrichtung (700) nach einem der Ansprüche 6 oder 7 zum Parameterisieren des Zufallsfelds.

9. Simulationsvorrichtung (730) zum Simulieren eines technischen Systems zwecks Verringerung von realen Experimenten zur Untersuchung des Verhalten des Systems, **gekennzeichnet durch** eine Modellerzeugungsvorrichtung (709) nach Anspruch 8 zur Erzeugung eines Modells des technischen Systems.

10. Computerprogrammprodukt, das unmittelbar in den internen Speicher eines Computers geladen werden kann, enthaltend Instruktionen zur Durchführung des Verfahrens nach einem der Ansprüche 1 bis 5.

**Claims**

1. A parametrization method for the parametrization of an n-dimensional random field, n being a natural number equal to or greater than 1, comprising the steps:

   observing the random field as an n-dimensional image and carrying out a pattern recognition (716) for recognizing patterns in the image, the pattern recognition (716) comprising a blob detection,
   generating a set of parameters (722) based on the recognized patterns,
   filtering a discrete signal (712) characterizing the random field by means of a Gaussian filter (714), for dividing the signal into differently bounded frequency bands in order thus to carry out a transformation into several scales,
   detecting patterns on different scales,
   generating the set of parameters (722) based on the patterns detected on different scales,
   carrying out the steps of filtering and detecting patterns iteratively one after the other for different scales in order thus to obtain parameter sets (722) for different scales,

   wherein, for an ith scale and a subsequent (i+1)th scale that follows in the iteration, the steps are carried out:

   a) filtering an input signal $E_{i-1}$ in order to obtain the ith signal Si of the ith scale,
   b) generating the parameter set Ti by carrying out a pattern recognition on the ith signal Si,

   **characterized by** the steps:

   c) approximating (718) the ith signal Si using the parameter set Ti, in particular by means of a transformation A that is inverse to the pattern recognition, in order to obtain an approximated signal $\tilde{S}_i$,
   d) using a difference $E_i = E_{i-1} - \tilde{S}_i$ between the input signal $E_{i-1}$ and the approximated signal $\tilde{S}_i$ as an input signal $E_i$ for the (i+1)th scale, and carrying out the steps a) to c) for the (i+1)th scale.

2. The parametrization method according to claim 1,
   **characterized in that**
   the blob detection comprises:

   detection of local maxima (602) and minima (604, 606),
   defining of blobs (600) based on the detected local maxima (602) and minima (604, 606), wherein either a) a local maximum (602) or b) a local minimum and values in a region of support (608) around the maximum (602) or minimum constitute a blob (600),
   wherein the region of support (608), in case a), is bounded by respectively adjacent local minima (604, 606), and in case b), by respectively adjacent local maxima, and
   generating a blob parameter set per blob (600) from the properties of the blob (600).

3. The parametrization method according to claim 2,
   **characterized in that**
   the blob parameter set includes several or all of the following values:

   position of a) the maximum (602) or b) the minimum;
   extreme value of a) the maximum (602) or b) the minimum;
   first contrast (610), defined as the difference between the values a) of the maximum (602) and a first adjacent minimum (604) located on a first side or b) of the minimum and a first adjacent maximum located on a first side;
   second contrast (616), defined as the difference between the values a) of the maximum (602) and the second adjacent minimum (606) located on a second side or b) of the minimum and the second adjacent maximum located on the second side;
   first region of support (612) defined as an, in particular local or temporal, distance between a) the first minimum (604) and the maximum (602) or b) between the first maximum and the minimum, and/or
   second region of support (614) defined as an, in particular local or temporal, distance between a) the maximum (602) and the second minimum (606) or b) between the minimum and the second maximum.

4. A modeling method for modeling properties of a plurality of measured or simulated samples of a technical system as at least one random field, **characterized by** the parametrization of the random field by means of the parametrization method according to any one of the preceding claims.

**EP 2 748 761 B1**

**5.** A simulation method for simulating a technical system for the purpose of reducing real experiments for examining the behavior of the system, **characterized by** modeling the technical system by means of the modeling method according to claim 4.

**6.** A parametrization device (700) for the parametrization of an n-dimensional random field, n being a natural number equal to or greater than 1, comprising:

a pattern recognition device (703) configured for observing the random field as an n-dimensional image and carrying out a pattern recognition for recognizing patterns in the image, the pattern recognition device (703) comprising a blob detection device (704) for detecting blobs (600),
a parameter set generating device (705) for generating a set of parameters (722) based on the patterns recognized by the pattern recognition device (703),
a signal filter device (702) for filtering a discrete signal (712) characterizing the random field by means of a Gaussian filter (714), the signal filter device (702) being configured for dividing the discrete signal (712) characterizing the random field into differently bounded frequency bands in order thus to carry out a transformation into several scales,
wherein the pattern recognition device (703) is configured for detecting patterns on different scales, and
wherein the parameter set generating device (705) is configured for generating the set of parameters (722) based on the patterns detected on different scales,

wherein the parametrization device is configured for carrying out the filtering and detecting of patterns iteratively one after the other for different scales in order thus to obtain parameter sets (722) for different scales, and is further configured to carry out, for an ith scale and a subsequent (i+1)th scale that follows in the iteration, the steps of:

a) filtering an input signal Ei-1 in order to obtain the ith signal Si of the ith scale,
b) generating the parameter set Ti by carrying out a pattern recognition on the ith signal Si,

**characterized by**

c) approximating (718) the ith signal Si using the parameter set Ti, in particular by means of a transformation A that is inverse to the pattern recognition, in order to obtain an approximated signal,
d) using a difference between the input signal Ei-1 and the approximated signal as an input signal Ei for the (i+1)th scale, and carrying out the steps a) to c) for the (i+1)th scale.

**7.** The parametrization device (700) according to claim 6,
**characterized in that**
the blob detecting device (704) is configured for detecting blobs (600) based on local extreme values (602, 604, 606).

**8.** A model generating device (709) for modeling properties of a plurality of measured or simulated samples of a technical system as at least one random field, characterized a parametrization device (700) according to any one of the claims 6 or 7 for the parametrization of the random field.

**9.** A simulation device (730) for simulating a technical system for the purpose of reducing real experiments for examining the behavior of the system, **characterized by** a model generating device (709) according to claim 8 for generating a model of the technical system.

**10.** A computer program product that can be loaded directly into the internal memory of a computer, including instructions for carrying out the method according to any one of the claims 1 to 5.

**Revendications**

**1.** Procédé de paramétrage d'un champ aléatoire à n dimensions, n étant un nombre entier positif égal ou supérieur à 1, comprenant des étapes consistant à :

visualiser le champ aléatoire comme une image à n dimensions et effectuer une identification de modèle (716) pour identifier des modèles dans l'image, l'identification de modèle (716) comprenant une identification de bob, produire un jeu de paramètres (722) à partir du modèle identifié,

filtrer un signal discret (712) caractérisant le champ aléatoire au moyen d'un filtre de Gauss (714) pour subdiviser le signal en différentes bandes de fréquences limitées pour effectuer ainsi une transformation en plusieurs échelles,

détecter des modèles selon différentes échelles,

produire le jeu de paramètres (722) sur le fondement du modèle détecté selon différentes échelles,

mettre en oeuvre les étapes de filtrage et de détection de modèles de façon itérative à la suite les unes des autres pour différentes échelles pour obtenir ainsi des jeux de paramètres (722) pour différentes échelles,

procédé selon lequel pour une ième échelle et une (i+1)ième échelle suivante dans l'itération, les étapes suivantes sont mises en oeuvre :

a) filtrer un signal d'entrée $E_{i-1}$, pour obtenir le ième signal $S_i$ de la ième échelle,

b) produire le jeu de paramètres $T_i$ en effectuant une identification de modèle sur le ième signal $S_i$,

**caractérisé par** des étapes consistant à

c) effectuer une approximation (718) sur le ième signal $S_i$ en utilisant le jeu de paramètres $T_i$, en particulier par une transformation A inverse de l'identification de modèle pour permettre d'obtenir un signal $\tilde{S}_i$,

d) utiliser la différence $E_i = E_{i-1} + \tilde{S}_i$ entre le signal d'entrée $E_{i-1}$ et le signal d'approximation $\tilde{S}_i$ en tant que signal d'entrée $E_i$ pour la (i+1)ième échelle, et effectuer les étapes a) à c) pour la (i+1)ième échelle.

2. Procédé de paramétrage conforme à la revendication 1,
   **caractérisé en ce que** la détection de bob comprend des étapes consistant à :

   détecter des maxima (602) et des minima (604, 606) locaux,
   définir des bobs (600) sur le fondement des maxima (602) et des minima (604, 606) locaux détectés, a) un maximum local (602) ou b) un minimum local ainsi que des valeurs situées dans une région support (608) autour du maximum (602) ou du minimum représentant un bob (600),
   la région support (608) étant délimitée dans le cas a) par les minima locaux (604, 606) respectivement voisins, et dans le cas b) par les maxima locaux respectivement voisins, et
   produite un jeu de paramètres de bob par bob (600) à partir des caractéristiques du bob (600).

3. Procédé de paramétrage conforme à la revendication 2,
   **caractérisé en ce que**
   le jeu de paramètres de bob comprend plusieurs ou la totalité des valeurs suivantes :

   position a) du maximum (602) ou b) du minimum,
   valeur extrême a) du maximum (602) ou b) du minimum,
   premier contraste (610) défini en tant que différence entre les valeurs a) du maximum (602) et d'un premier minimum voisin (604) situé d'un premier côté, ou b) du minimum et d'un premier maximum voisin situé d'un premier côté,
   second contraste (616) défini en tant que différence entre les valeurs a) du maximum (602) ou du second minimum voisin (606) situé d'un second côté, ou b) du minimum et du second maximum voisin situé du second côté,
   première région support (612) définie en tant que distance en particulier locale ou chronologique entre a) le premier minimum (604) et le maximum (602) ou b) entre le premier maximum et le minimum et/ou seconde région support (614) définie en tant que distance en particulier locale ou chronologique entre a) le maximum (602) et le second minimum (610) ou b) entre le minimum et le second maximum.

4. Procédé de modélisation de propriétés d'un ensemble d'échantillons mesurés ou simulés d'un système technique sous la forme d'au moins un champ aléatoire,
   **caractérisé par** le paramétrage du champ aléatoire par la mise en oeuvre du procédé de paramétrage conforme à l'une des revendications précédentes.

5. Procédé de simulation d'un système technique dans le but de diminuer les expérimentations réelles pour analyser le comportement du système,
   **caractérisé par** une modélisation du système technique par la mise en oeuvre du procédé de modélisation conforme à la revendication 4.

**6.** Dispositif de paramétrage (700) d'un champ aléatoire à n dimensions, n étant un nombre entier positif égal ou supérieur à 1, comprenant :

un dispositif d'identification de modèle (703) réalisé pour permettre de visualiser le champ aléatoire en tant qu'image à n dimensions, et effectuer une identification de modèle pour identifier des modèles dans l'image, le dispositif d'identification de modèle (703) comprenant un dispositif de détection de bob (704) pour permettre de détecter des bobs (600),
un dispositif de production d'un jeu de paramètres (705) pour permettre de produire un jeu de paramètres (722) à partir du modèle identifié par le dispositif d'identification de modèle (703),
un dispositif de filtrage de signal (702) permettant de filtrer un signal discret (712) caractérisant le champ aléatoire avec un filtre de Gauss (714), le dispositif de filtrage de signal (702) étant réalisé pour permettre de subdiviser le signal discret (712) caractérisant le champ aléatoire en différentes bandes de fréquences délimitées, pour effectuer ainsi une transformation en plusieurs échelles,
le dispositif d'identification de modèle (703) étant réalisé pour permettre de détecter des modèles sur des échelles différentes,
le dispositif de production d'un jeu de paramètres (705) étant réalisé pour permettre de produire le jeu de paramètres (722) sur le fondement des modèles détectés sur différentes échelles,

le dispositif de paramétrage étant réalisé pour permettre d'effectuer le filtrage et la détection de modèles successivement de manière itérative pour différentes échelles, pour permettre d'obtenir ainsi des jeux de paramètres (722) pour différentes échelles et étant en outre réalisé pour permettre d'effectuer, pour une ième échelle et une (i+1)ème échelle suivante dans l'itération des étapes consistant à :

a) filtrer un signal d'entrée $E_{i-1}$ pour obtenir le ième signal $S_i$ de la ième échelle,
b) produire le jeu de paramètres $T_i$ en effectuant une identification de modèle sur le ième signal,

**caractérisé par** des étapes consistant à :

c) faire une approximation (718) sur le ième signal $S_i$ en utilisant le jeu de paramètres $T_i$, en particulier par une transformation A inverse de l'identification de modèle pour obtenir un signal d'approximation,
d) utiliser la différence entre le signal d'entrée $E_{i-1}$ et le signal d'approximation en tant que signal d'entrée $E_i$ pour la (i+1)ème échelle, et effectuer les étapes a) à c) pour la (i+1)ème échelle.

**7.** Dispositif de paramétrage (700) conforme à la revendication 6,
**caractérisé en ce que**
le dispositif de détection de bob (704) est réalisé pour permettre de détecter des bobs (600) sur le fondement de valeurs extrêmes locales (602, 604, 606).

**8.** Dispositif de modélisation (709) pour permettre de modaliser des caractéristiques d'un ensemble d'échantillons mesurés ou simulés d'un système technique sous la forme d'au moins un champ aléatoire,
**caractérisé par**
un dispositif de paramétrage (700), conforme à l'une quelconque des revendications 6 et 7 pour permettre de paramétrer le champ aléatoire.

**9.** Dispositif de simulation (730) pour permettre de simuler un système technique dans le but de diminuer les expériences réelles pour analyser le comportement du système,
**caractérisé par** un dispositif de production de modèle (709) conforme à la revendication 8 pour permettre d'obtenir un modèle du système technique.

**10.** Produit-programme d'ordinateur pouvant être directement chargé dans la mémoire interne d'un ordinateur renfermant des instructions pour permettre la mise en oeuvre d'un procédé conforme à l'une des revendications 1 à 5.

FIG 1

102

104

100

$F = H(r)$

$r$     $L$

Fig. 2

FIG 3

80     81     82     83

...     ...

(a)

$y_i$     80-83

$x_i$

(b)

## FIG 4

402
max ) min

412  400
404

410  406  408

## Fig. 5

400  400  400  400

y

406  406  406  406

500

x

## Fig. 6

600
602

610  616

604  612  614  606

608

Fig. 7

# FIG 8

$$S_i \quad E_0 = S_0$$
$$S_c \quad S_1 = G_1 * E_0$$
$$A_p \quad \widetilde{S}_1 = A(M(S_1))$$
$$E_r \quad E_1 = E_0 - \widetilde{S}_1$$

$$S_i \quad E_1$$
$$S_c \quad S_2 = G_2 * E_1$$
$$A_p \quad \widetilde{S}_2 = A(M(S_2))$$
$$E_r \quad E_2 = E_1 - \widetilde{S}_2$$

FIG 9

FIG 10

FIG 11

FIG 12

FIG 13

4          8          12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- AU 2003272233 B2
- US 7885463 B2
- CN 101694719
- DE 602004009960 T2
- US 20100254582 A1
- US 20100256977 A1
- US 20110021915 A1
- WO 2011002327 A1
- US 20100260396 A1

### In der Beschreibung aufgeführte Nicht-Patentliteratur

- **L. GRAHAM-BRADY ; X.F. XU.** Simulation and Classification of Random Multiphase Materials through Short-Range Correlation. *AIAA Non-Deterministic Approaches Conference,* 01. Mai 2006
- **A.P. WITKIN.** Proc. 8th Int. Joint Conf. Art. Intell. *Scale-Space Filtering,* 1983
- **T. LINDEBERG.** Scale-Space Theory in Computer Vision. Kluwer Academic Publishers, 1994
- Image Analysis, Random Fields and Markov Chain Monte Carlo Methods. **WINKLER ; GERHARD.** Finite Random Fields. Springer Verlag Berlin Heidelberg, 2003, 55-72
- **MISITI M et al.** *Les ondelettes et leurs applications,* 2003, ISBN 2-7462-0526-2
- **DAUBECHIES I.** *Ten Lectures on Waveletts,* 1992, ISBN 0-89871-274-2